# EUROPEAN PATENT APPLICATION

(11) **EP 1 416 168 A1**
(43) Date of publication of application: **06.05.2004**
(21) Application number: 03104009.0
(22) Date of filing: 29.10.2003
(51) Int. Cl.: F16B 7/04, F16B 9/00

(54) **Insert for connecting a tubular element to another element in a modular structure, insertion apparatus and relative method**

(30) Priority: 30.10.2002 IT UD20020228
(71) Applicant: Odorico, Angelo, 33050 Rivignano (Udine) (IT); Odorico, Marco, 33050 Rivignano (UD) (IT)
(72) Inventor: Odorico, Angelo, 33050 Rivignano (Udine) (IT); Odorico, Marco, 33050 Rivignano (UD) (IT)
(74) Representative: Petraz, Gilberto Luigi

(57) **Abstract**

Insert for connecting a first tubular element (11) to a second element (12) of a modular structure. The insert (10) comprises a main body which is inserted and blocked inside the first tubular element (11), and at least an anchoring seating associated with the main body. Mating attachment means (21) are inserted into the anchoring seating to connect the first tubular element (11) to the second element (12).

## Description

### FIELD OF THE INVENTION

The present invention concerns an insert able to be inserted inside a tubular element such as for example the upright or leg of a piece of furniture, in correspondence with its point of connection with another element of a modular structure, for example a beam, a panel, a joint, a support or otherwise.

The insert according to the invention allows to make a stable and secure connection between the two elements, thus resulting extremely economical, practical and simple, and quick to install.

### BACKGROUND OF THE INVENTION

Different systems are known, used to connect a first tubular element, for example the upright of a shelf unit, with a second element, for example a plane, a joint or a support.

A first system provides to use a threaded bushing inserted from the outside into a hole made on the wall of the tubular element, in correspondence with the point of connection, onto which a screw is threaded which fixes the elements to be connected. Such bushing is fixed on the tubular element by means of riveting and has a widened edge on the outside which is arranged in abutment on the outer surface of the tubular element itself.

A first disadvantage of this system is that the edge, protruding from the outer surface of the tubular element, creates a gap between the two elements to be connected, making the coupling imperfect. Another disadvantage is that, since it has to be constructed in stainless steel in order to resist oxidizing and corrosive agents, such bushing is rather expensive.

A second system provides to make a hole on the tubular element using a technique with which the shaving deforms outwards, forming a circular wall which is subsequently threaded internally, so as to create a screwing seating for an attachment screw.

This system is still more expensive than the previous one, since it requires a series of burdensome and complex workings. Moreover, to obtain such deformation of the hole, tools are used with widia tips, which are subject to frequent breakages, entailing considerable costs to replace them. Furthermore, in this technique lubricating substances are used that require a cleaning operation after the assembly has been completed.

The Applicants have devised and embodied the present invention to overcome the shortcomings of the state of the art and to obtain other advantages.

### SUMMARY OF THE INVENTION

The present invention is set forth and characterized essentially in the main claims, while the dependent claims describe other innovative characteristics of the invention.

The purpose of the present invention is to allow the connection between a tubular element and another element in such a manner that they do not have protruding parts subject to wear or damage and that can impede coupling or make it imprecise.

Another purpose is to accelerate and simplify the operations to prepare a first tubular element to arrange it for connection with a second element.

In accordance with these purposes, the invention uses an insert which comprises a main body, at least partly deformable elastically, with a transverse section mating with the section of the first tubular element to be connected and able to be inserted and blocked inside the latter, for example through interference; there is at least an anchoring seating on said main body for mating attachment means which achieve the connection between the first tubular element and the second element.

Said anchoring seating is able to be aligned at least with a first through hole, made on a wall of the first tubular element, and a second through hole made on the second element.

According to a first embodiment, the anchoring seating is made integrally on the main body of the insert. According to a variant, the anchoring seating is defined by an element added onto said main body.

In one embodiment of the invention, such anchoring seating is threaded internally and is able to accommodate attachment means of the screw type.

In a preferential embodiment, such anchoring seating is defined by a connection element, for example a nut inserted under pressure inside a mating aperture made on the main body of the insert.

It comes within the field of the present invention to include anchoring seatings of a different type, for example able to accommodate snap-in, pin or bayonet attachment means or suchlike.

Advantageously, the main body has axially a through cavity connected to a plurality of radial slits able to allow the deformation of the main body when it is inserted into the first tubular element.

According to one embodiment of the invention, the insert is inserted under pressure inside the first tubular element, using pressure means of a known type, such as a pneumatic piston or similar.

The main body of the insert, thrust by the pressure means, deforms elastically and is compressed until it reaches the position in which the anchoring seating is aligned with the holes on the elements to be connected, allowing to screw in or introduce the attachment means. Once such main body has been released, it tends to return to its original shape, and is constrained through interference against the walls of the tubular element.

In a preferential embodiment, the pressure means cooperate with guide and centering means, able to facilitate and direct the insertion of the insert into the correct position, and with alignment means, for example of the laser type, able to detect that the desired position inside the first tubular element has been reached by the insert.

Since it is arranged completely retracted inside the first tubular element, the insert according to the invention does not create interference in coupling of the two elements to be connected and is protected from wear and damage. It is not expensive to make since the main body can be made by molding plastic material, even recycled, and the anchoring seatings can be made using hardware elements of common use, since they are all internal and not subject to the action of deteriorating agents.

Its application to the tubular element is carried out in a single step which does not require a long time, particular ability or specific equipment, which allows to further limit the costs. A further advantage is that it is possible to easily change the connection position of the two elements, by translating the insert inside the tubular element, in correspondence with another through hole made on said element, something which is not possible with the present methods in the state of the art.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of two elements of a modular structure connected with an insert according to the present invention;
- fig. 2 is a three-dimensional view of an insert according to the present invention;
- fig. 3 shows a section of the insert in fig. 2;
- fig. 4 shows a variant of fig. 3;
- fig. 5 is a three-dimensional view of the insert in fig. 2 and a relative guide and centering member for insertion into a tubular element;
- figs. 6a and 6b show a front view, partly in section, of the insertion of an insert according to the invention into a mating tubular element.

### DETAILED DESCRIPTION OF A PREFERENTIAL FORM OF EMBODIMENT OF THE INVENTION

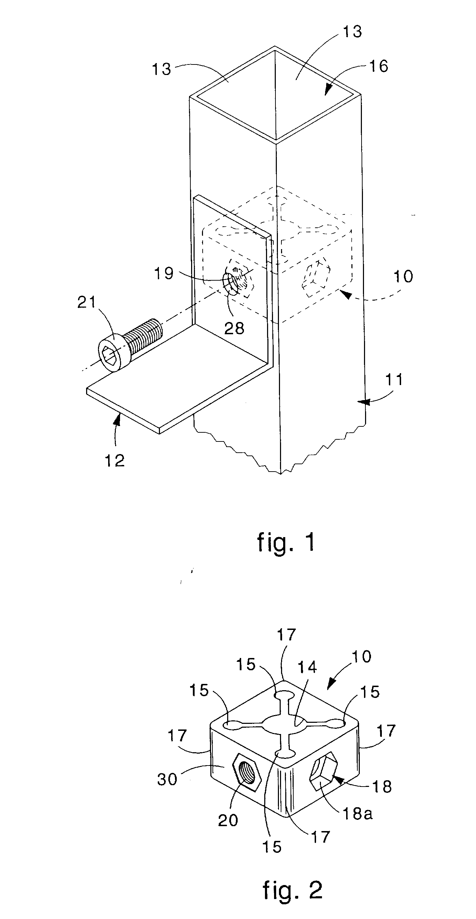

With reference to the attached drawings, an insert 10 according to the present invention is able to be inserted into a first element 11, of a tubular type, for example consisting of an upright of a frame, to allow it to be connected with a second element 12, in this case an angled element, able for example to support a plane (fig. 1).

The insert 10 consists of a main body 30, advantageously made of plastic or other synthetic resin, also deriving from recycling processes, at least partly deformable in elastic manner and provided axially with a through cavity 14. It has a transverse section substantially equivalent to that of the axial cavity 16 of the tubular element 11, so as to be able to be inserted inside the latter and blocked through interference onto the relative walls 13, as will be explained later.

In this case, the tubular element 11 has a square section and the insert 10 a parallelepiped conformation with the edges 17 rounded. From the through cavity 14 four slits 15, with a widened end, branch off radially towards the edges 17; such slits 15 confer a greater flexibility and deformability on the main body 30 of the insert 10, so that the latter can be compressed during its insertion inside the tubular element 11 and can subsequently expand to block itself inside the axial cavity 16.

In the embodiment shown here, on each of the four lateral faces the insert 10 has a relative aperture 18, also of the through type, comprising a first widened outer segment 18a, in this case with a hexagonal section, and a second inner segment 18b with a reduced circular section. Inside the first segment 18a of each aperture 18 an internally threaded element is located, in this case consisting of a nut 20 of the type commonly available on the market, defining the screwing seating for a mating screw 21 by means of which the connection between the tubular element 11 and the angular element 12 is achieved. Advantageously, the nut 20 is inserted simply under pressure inside the first segment 18a of the aperture 18.

In this case, the figures show the connection to the tubular element 11 of only one element 12 in correspondence with a single wall 13, but it is obvious that on each side of the tubular element 11 a relative element can be associated, by providing nuts 20 applied to the respective apertures 18 of the main body 30.

According to the invention, the insert 10 is arranged inside the tubular element 11 until the nut 20 is aligned with a first through hole 19 made, in correspondence with the point of connection, on the wall 13 of the tubular element 11, and with a second through hole 28 on the second element 12 in order to allow the screw 21 to be screwed in.

According to a variant not shown here, the insert 10 has two or more apertures 18 aligned longitudinally so that several nuts 20, aligned with each other, can be accommodated, in order to allow for example to connect two or more respective elements 12 using the same insert 10.

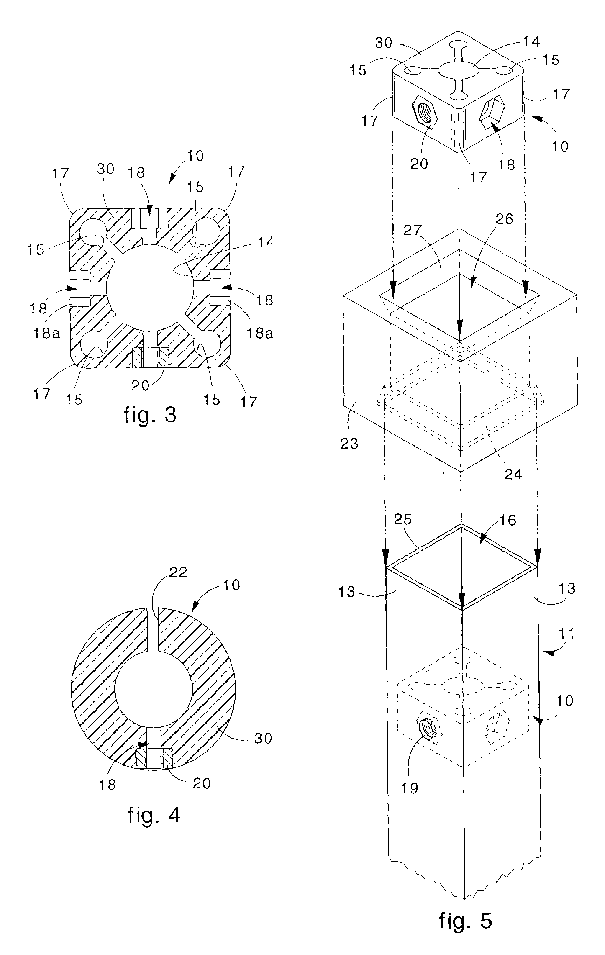

According to another variant, shown in fig. 4, the insert 10 has the form of an open ring, including a longitudinally through cut 22 which allows it to deform at the moment it is inserted into the tubular element 11; in this solution such insert 10 has a single aperture 18 which allows to accommodate the nut 20 in a position diametrically opposite the cut 22.

The insert 10 as described heretofore can be inserted simply and in automated manner inside the tubular element 11, using common devices, so as to limit the costs of assembly.

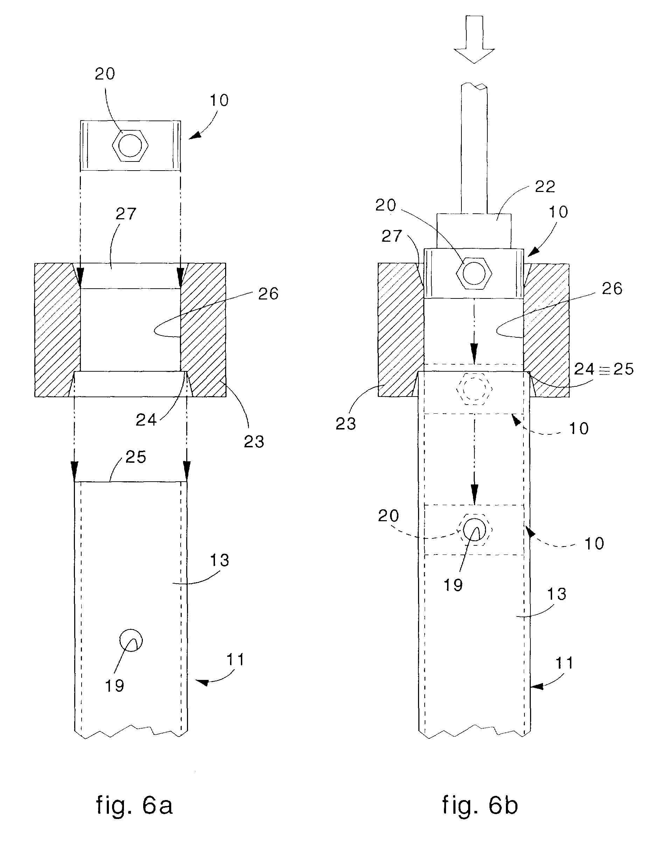

As shown in figs. 5, 6a and 6b, this insertion can be performed using a pressure member 22, for example a pneumatic piston, and a laser device, of a substantially known type and not shown here, to define the correct blocking position of the insert 10 inside the tubular element 11.

In the preferential embodiment shown here, a guide and centering member 23 is also used, consisting of a body, advantageously metal, provided with a through axial cavity 26 with a section equivalent to the axial cavity 16 of the tubular element 11 and defining on one side an abutment edge 24, able to cooperate with the edge 25 of the tubular element 11, and on the other side a widened lead-in zone 27.

The tubular element 11 is arranged with its edge 25 resting on the abutment edge 24 of the guide and centering member 23, while the insert 10 is positioned in correspondence with the widened zone 27. By means of the pressure member 22 the insert 10 is thrust inside the through cavity 26 of the guide and centering member 23 and then towards the mating through cavity 16 of the tubular element 11 until it reaches the correct blocking position in which the nut 20 is in alignment with the through hole 19.

The laser device detects that the insert 10 has reached such position, and allows the pressure member 22 to automatically stop.

During the insertion step, in which the pressure member 22 exerts a thrust thereon, the insert 10 deforms and is compressed towards the through cavity 14, then, once the blocking position is reached, it expands, compressing the walls 13 of the tubular element 11 and constraining itself through interference inside the latter.

It is clear, however, that modifications and/or additions of parts may be made to the insert 10 as described heretofore, without departing from the field and scope of the present invention.

For example, the insert 10 can have a different form from those shown here, also according to the tubular element 11 to which it has to be associated.

Or, instead of the nut 20, another, functionally equivalent anchorage element can be used, either of the threaded type, or of another type, provided that it is able to allow the anchorage of a mating attachment means.

Moreover, such anchorage element can be made integrally with the insert 10.

It is also clear that, although the present invention has been described with reference to specific examples, a person of skill in the art shall certainly be able to achieve many other equivalent forms of insert, all of which shall come within the field and scope of the present invention.

## Claims

1. Insert for connecting a first tubular element (11) to a second element (12) of a modular structure, **characterized in that** it comprises a main body (30) able to be inserted and blocked inside said first tubular element (11), and at least an anchoring seating (20) associated with said main body (30) and in which mating attachment means (21) are able to be inserted in order to connect said first tubular element (11) to said second element (12).

2. Insert as in claim 1, **characterized in that** said main body (30) is at least partly deformable elastically and is able to be blocked inside said tubular element (11) through mechanical interference.

3. Insert as in claim 1 or 2, **characterized in that** said anchoring seating (20) is internally threaded and said attachment means (21) are of the screw type.

4. Insert as in any claim hereinbefore, **characterized in that** said anchoring seating (20) is made integrally on said main body (30).

5. Insert as in any claim from 1 to 3 inclusive, **characterized in that** said anchoring seating is defined by an element (20) for the connection to said attachment means (21) and fixed on said main body (30).

6. Insert as in claim 5, **characterized in that** said anchoring seating comprises a nut (20) inserted under pressure inside a mating aperture (18) made on said main body (30).

7. Insert as in any claim hereinbefore, **characterized in that** it has at least two of said anchoring seatings (20) longitudinally aligned.

8. Insert as in any claim hereinbefore, **characterized in that** it has a transverse section mating with the section of said first tubular element (11), so that its lateral faces are able to cooperate with the walls (13) of said first tubular element (11).

9. Insert as in any claim hereinbefore, **characterized in that** said main body (30) has axially a through cavity (14).

10. Insert as in any claim hereinbefore, **characterized in that** said main body (30) has a plurality of slits (15) able to increase its deformability.

11. Insert as in claims 9 and 10, **characterized in that** said slits (15) are arranged radially and connected to said through cavity (14).

12. Insert as in any claim hereinbefore, **characterized in that** said main body (30) has a longitudinal cut (22) able to increase its deformability.

13. Modular structure comprising at least a first tubular element (11) connected with a second element (12), **characterized in that** inside said first tubular element (11) a connection insert is blocked comprising at least an anchoring seating (20) in which are inserted mating attachment means (21) for the connection of said first tubular element (11) and said second element (12).

14. Modular structure as in claim 13, **characterized in that** said insert is blocked in a determinate position in which said anchoring seating (20) is aligned at least with a first through hole (19) made on at least a wall (13) of said first tubular element and with a second through hole (28) made on said second element (12).

15. Apparatus for the insertion of an insert to connect a first tubular element (11) to a second element (12) of a modular structure, said insert being able to be blocked into said first tubular element (11) and being provided with at least an anchoring seating (20) for mating attachment means (21) of said first and second element (11, 12), **characterized in that** it comprises guide and centering means (23) able to facilitate and direct the insertion of said insert (10) into the correct position inside said first tubular element (11).

16. Apparatus as in claim 15, **characterized in that** said guide and centering means comprise a member (23) provided with a through cavity (26), with a section mating with the section of said first tubular element (11), and defining an abutment edge (24), able to cooperate with the edge (25) of said first tubular element (11), and a widened lead-in zone (27), said insert (10) being located in correspondence with said widened zone (27) to facilitate the insertion into said first tubular element (11).

17. Method for the insertion of an insert to connect a first tubular element (11) to a second element (12) of a modular structure, an anchoring seating (20) being made in said insert in which mating attachment means of said first and second element (11, 12) are able to be inserted, **characterized in that** said insert (10) is thrust by means of pressure means inside said first tubular element (11) until it assumes a pre-defined blocking position in correspondence with the point of connection of said first and second elements (11, 12).

18. Method as in claim 17, **characterized in that** said pressure means (22) cooperate with at least a laser device able to detect that said blocking position has been reached by the insert (10).
